# EUROPÄISCHE PATENTSCHRIFT

(11) **EP 1 124 623 B1**
(45) Veröffentlichungstag und Bekanntmachung des Hinweises auf die Patenterteilung: **02.08.2006**
(21) Anmeldenummer: 99953874.7
(22) Anmeldetag: 18.10.1999
(51) Int. Cl.: B01D 53/86, B01J 23/00

(54) **VERFAHREN ZUR KATALYTISCHEN ZERSETZUNG VON N2O**
METHOD FOR CATALYTIC DECOMPOSITION OF N2O
PROCEDE POUR LA DECOMPOSITION CATALITIQUE DU N2O

(30) Priorität: 21.10.1998 DE 19848595
(43) Veröffentlichungstag der Anmeldung: 22.08.2001
(73) Patentinhaber: BASF Aktiengesellschaft, 67056 Ludwigshafen (DE)
(72) Erfinder: BAIER, Michael, D-68161 Mannheim (DE); FETZER, Thomas, D-67346 Speyer (DE); HOFSTADT, Otto, D-67122 Altrip (DE); HESSE, Michael, D-67549 Worms (DE); BÜRGER, Gert, D-68199 Mannheim (DE); HARTH, Klaus, D-67317 Altleiningen (DE); SCHUMACHER, Volker, D-67227 Frankenthal (DE); WISTUBA, Hermann, D-68259 Mannheim (DE); OTTO, Bernhard, D-67117 Limburgerhof (DE)
(74) Vertreter: Isenbruck, Günter
(86) Internationale Anmeldenummer: PCT/EP1999/007889
(87) Internationale Veröffentlichungsnummer: WO 2000/023176

(56) Entgegenhaltungen:
- EP-A- 0 687 499
- EP-A- 0 779 093
- EP-A- 0 779 094
- EP-A- 0 779 095
- WO-A-94/16798
- DE-A- 4 224 881
- DE-A- 19 653 200

## Beschreibung

Die Erfindung betrifft ein Verfahren zur Zersetzung von N₂O mit einem Katalysator.

N₂O entsteht als Nebenprodukt bei vielen Prozessen, bei denen HNO₃ in flüssiger Phase als Oxidationsmittel eingesetzt wird. Insbesondere bei der Umsetzung von Alkoholen, Aldehyden und Ketonen, z.B. Cyclohexanol und Cyclohexanon zu Adipinsäure, Acetaldehyd zu Glyoxal oder Glyoxal zu Glyoxylsäure werden beträchtliche Mengen N₂O freigesetzt. Weiterhin wird N₂O bei der Herstellung von Nikotinsäure und Hydroxylamin emittiert. Daneben bildet sich N₂O als Nebenprodukt auch bei der Herstellung von Salpetersäure durch Verbrennung von NH₃.

In einem im Jahr 1991 in der Zeitschrift Science, 251 (1991), Seite 932 veröffentlichten Artikel zeigen Thiemens und Trogler auf, daß N₂O ein gewisses Schädigungspotential für die Erdatmosphäre zukommt. N₂O gilt in der Stratosphäre als eine wesentliche Quelle für NO, welches wiederum wesentlichen Einfluß auf den Abbau von Ozon in der Stratosphäre haben soll. Zudem gilt N₂O als Treibhausgas, wobei das Erderwärmungspotential von N₂O etwa 290 mal größer sein soll als das von CO₂.

In den letzten Jahren wurde eine Vielzahl von Druckschriften veröffentlicht, die sich mit der Verminderung der durch anthropogene Tätigkeiten bedingten N₂O - Emissionen beschäftigen.

Die Verwendung von Katalysatoren bei der Reduktion bzw. Zersetzung von N₂O erlaubt es, die Reaktion bei einem, im Vergleich zur rein thermischen Zersetzung, deutlich tieferen Temperaturniveau durchzuführen.

In EP-A 0 687 499 ist ein Katalysator zur katalytischen Reduktion von NOₓ und/oder zur Oxidation von Kohlenwasserstoffen in Abgasen beschrieben, der aus einem Kupferoxid-Zinkoxid-Aluminiumoxid-Spinell der chemischen Formel Cu_{A}Zn_{C}Al_{D}O₄ besteht, wobei A + C + D = 3,A >0,C > 0 und D>0 gilt. Das Verhältnis von Cu und Zn zu Al ist in dieser Veröffentlichung in großen Grenzen freigehalten. In einem Beispiel wird NO mit Propen zu N₂ und H₂O an den offenbarten Katalysatoren umgesetzt. Auf die Zersetzung von N₂O bei hohen Temperaturen wird nicht eingegangen.

WO 94/16798 beschreibt ein Verfahren zur katalytischen Zersetzung von reinem oder in Gasgemischen enthaltenem N₂O. Als Katalysator wird ein MₓAl₂O₄₋Katalysator eingesetzt. Dieser wird durch Mischen von CuAl₂O₄ mit Sn, Pb oder einem Element der 2. Hauptgruppe oder Nebengruppe des Periodensystems der Elemente als Oxid oder Salz oder in elementarer Form und anschließendes Calcinieren bei einer Temperatur von 300 °C bis 1300 °C und einem Druck von 0,1 bis 200 bar hergestellt. Gemäß den Vergleichsbeispielen 1 und 2, wie sie in der vorliegenden Beschreibung weiter unten unter "Beispiele" zu Beginn dargestellt sind, beträgt der x-Wert in der allgemeinen Formel MₓAl₂O₄ 0,61 (Vergleichsbeispiel 1) bzw. 0,76 (Vergleichsbeispiel 2).

Die aus dem Stand der Technik bekannten Verfarhen zur Zersatzung von N₂O benutzen Katalysatorsysteme, die folgende Nachteile aufweisen. Ihre thermische Stabilität bei Temperaturen oberhalb von 500°C ist nicht optimal. Ein Problem stellt weiterhin in vielen Fällen die Desaktivierung der Katalysatoren dar, die einen häufigen Austausch der Katalysatorschüttung notwendig macht. Insbesondere bei Temperaturen von oberhalb 500°C, wie sie für einen nahezu vollständigen Abbau des N₂O bei vertretbarer Katalysatormenge vorteilhaft sind, kommt es zu einer starken, irreversiblen Desaktivierung.

Aufgabe der vorliegenden Erfindung ist es daher, ein Verfahren zur Zersetzung von N₂O bereitzustellen, bei dem ein Katalysator bentzt wird, der bei hohen Temperaturen thermisch stabil ist.

Diese Aufgabe wird durch das Verfahren des Anspruchs 1 gelöst.

Bei den erfindungsgemäßen Katalysatoren handelt es sich vorzugsweise im wesentlichen um Spinelle, die in geringem Ausmaß noch freie Oxide in kristalliner Form, wie MO (M z.B. Cu, Zn, Mg) und M₂O₃ (M z.B. Al) enthalten können. Das Vorliegen einer Spinellphase kann durch die Aufnahme von XRD-Spektren nachgewiesen werden. Der Anteil der Oxide im Katalysator beträgt im allgemeinen 0 bis 5 Gew.-%, bevorzugt 0 bis 3,5 Gew.-%.

Die Menge an Cu und gegebenenfalls Zn und/oder Mg sollte so gewählt werden, daß man einen gefüllten bzw. nahezu gefüllten Spinell erhält. Das bedeutet, daß x in der allgemeinen Formel MₓAl₂O₄ einen Wert von 0,95 bis 1,1, aufweist. Der erfindungsgemäße Katalysator mit einem x-Wert von 0,95 bis 1,1, in der allgemeinen Formel MₓAl₂O₄ ist somit ein hochtemperaturstabiler Katalysator zur Zersetzung von N₂O. Der Katalysator zeigt ein günstiges Alterungsverhalten, d.h. der Katalysator bleibt lange Zeit aktiv, ohne thermisch desaktiviert zu werden.

Die Katalysatoren enthalten Kupfer in oxidischer Form, berechnet als Kupferoxid, CuO, in einer Menge von im allgemeinen 1 bis 54 Gew.-%, bevorzugt von 5 bis 40 Gew.-%, besonders bevorzugt von 10 bis 30 Gew.%, bezogen auf den Gesamtkatalysator.

Der Katalysator enthält zusätzlich weitere Dotierungen, insbesondere Zr und/oder La in oxidischer Form Dotierungen mit Zr und/oder La erhöhen die thermische Stabilität der Katalysatoren weiter, allerdings wird die Anfangsaktivität geringfügig gesenkt. Besonders vorteilhaft ist es, Zr- und/oder La-Dotierungen über entsprechende element-dotierte Al-Oxide einzubringen. Der Gehalt der Dotierverbindungen im Katalysator beträgt im allgemeinen zwischen 0,01 und 5,0 Gew.-%, bevorzugt zwischen 0,05 und 2 Gew.-%.

Zusätzlich kann der erfindungsgemäße Katalysator noch weitere metallische Aktivkomponenten enthalten. Solche metallischen Aktivkomponenten sind vorzugsweise Metalle der 8. Nebengruppe des Periodensystems der Elemente, besonders bevorzugt Pd, Pt, Ru, Rh. Dadurch können Katalysatoren erhalten werden, die nicht nur bei hohen Temperaturen sehr aktiv sind, sondern bereits bei Temperaturen von unter 400°C eine sehr hohe Aktivität besitzen. Die erfindungsgemäßen Katalysatoren können daher in einem weiten Temperaturbereich eingesetzt werden, was bei adiabat-betriebenen N₂O-Zersetzungsverfahren ein großer Vorteil ist. Der Anteil der Metalle der 8. Nebengruppe am erfindungsgemäßen Katalysator beträgt im allgemeinen 0,01 bis 5 Gew.-%, bevorzugt 0,1 bis 2 Gew.-%.

Die Trägerkatalysatoren können in Form von Pellets, Waben, Ringen, Splitt, Voll- und Hohlsträngen oder auch in anderen geometrischen Formen vorliegen. Für bestimmte Anwendungen ist es dabei wichtig, daß Form und Größe so gewählt werden, daß ein möglichst kleiner Druckverlust entsteht.

Die Katalysatoren weisen im allgemeinen eine BET-Oberfläche von 30 bis 150 m²/g, bevorzugt 50 bis 100 m²/g auf.

Die Katalysatoren weisen vorzugsweise ein bimodales oder trimodales Porengefüge auf. Sie enthalten Mesoporen von 10 bis 100 nm, bevorzugt von 10 bis 30 nm und Makroporen von 100 bis 5000 nm, bevorzugt 100 bis 2000 nm. Solche Katalysatoren sind deutlich aktiver als Katalysatoren mit monomodaler Porenstruktur.

Die Porosität des Trägers sollte vorteilhaft so beschaffen sein, daß das Porenvolumen zwischen 0,10 und 0,70 ml/g liegt.

Die Katalysatoren können aus oxidischen Einsatzstoffen hergestellt werden oder aus Einsatzstoffen, die beim abschließenden Calcinieren in die oxidische Form übergehen. Sie können nach einem Verfahren hergestellt werden, in dem die Einsatzstoffe, enthaltend Al, Cu und gegebenenfalls Zn und/oder Mg, sowie gegebenenfalls weitere Zusatzstoffe, in einem Schritt gemischt, zu Formkörpern verformt und gegebenenfalls bei Temperaturen von oberhalb 500°C behandelt werden.

In einer bevorzugten Ausführungsform des Verfahrens wird eine Mischung der Einsatzstoffe, beispielsweise durch Trocknen und Tablettierung, zu entsprechenden Formkörpern verarbeitet. Diese werden dann für 0,1 bis 10 Stunden auf Temperaturen zwischen 500°C und 1000°C erhitzt (Calcinierung). Alternativ kann unter Wasserzugabe in einem Kneter oder Mix-Muller eine verformbare Masse hergestellt werden, die zu entsprechenden Formkörpern verstrangt oder extrudiert wird. Die feuchten Formkörper werden getrocknet und anschließend wie beschrieben calciniert.

Besonders bevorzugt werden die Katalysatoren nach einem Verfahren hergestellt, das die folgenden Schritte umfaßt:
a) Herstellung eines oxidischen Cu-Al-Formkörpers,
b) Tränken des Formkörpers mit löslichen Cu- und gegebenenfalls Mg- und/oder Zn-Verbindungen,
c) anschließendes Trocknen und Calcinieren.

In diesem Verfahren wird vorzugsweise zuerst aus Cu in Form von Cu(NO₃)₂ und/oder Cu0 und einer Al-Komponente ein Träger hergestellt. Bei der Herstellung des Trägers kann eine Mischung der Einsatzstoffe beispielsweise trocken oder unter Wasserzugabe erfolgen. Auf den Träger können durch ein- oder mehrmalige Tränkung Zn- und/oder Mg-Komponente(n) aufgebracht werden. Die erfindungsgemäßen Katalysatoren erhält man nach Trocknung und Calcinierung bei Temperaturen von 500 bis 1000°C, bevorzugt von 600 bis 850 C.

Vorzugsweise wird Cu als Mischung aus CuO und Cu(NO₃)₂ eingesetzt. Die so hergestellten Katalysatoren besitzen eine höhere mechanische Stabilität als die nur aus CuO bzw. nur aus Cu(NO₃)₂ hergestellten Katalysatoren. Weiterhin ist es bevorzugt, gegebenenfalls entsprechende Mischungen von Oxiden und Nitraten des Zn und/oder Mg einzusetzen. Anstelle von Oxiden und Nitraten kann man auch reine Oxide einsetzen, wenn man zusätzlich dazu saure Verformungshilfsmittel wie Ameisensäure oder Oxalsäure zusetzt. Insbesondere bei der Herstellung der erfindungsgemäßen Katalysatoren in einem Schritt, bei der alle Einsatzstoffe gemischt und zu Formkörpern weiter verarbeitet werden, ist es sehr vorteilhaft, Mischungen von Oxiden und Nitraten einzusetzen.

Des weiteren ist es bevorzugt, als Aluminiumkomponente eine Mischung aus Al₂O₃ und AIOOH einzusetzen (z.B. von Condea). Geeignete Al-Komponenten sind in EP-A 0 652 805 beschrieben. Setzt man beispielsweise AIOOH und Al₂O₃ von Condea im Verhältnis von 70 Gew.-% zu 30 Gew.-% ein, so erhält man Katalysatoren, die eine bimodale Porenstruktur aufweisen. Sie sind deutlich aktiver als Katalysatoren mit monomodaler Porenstruktur.

Zur Erhöhung der Aktivität bei tieferen Temperaturen, insbesondere bei Temperaturen unterhalb von 400°C, können Metalle der 8. Nebengruppe des Periodensystems der Elemente, wie Pd, Pt, Ru und Rh auf die Katalysatoren aufgebracht werden. Vorzugsweise werden diese Edelmetalle über einen Tränk - schritt in Form ihrer Nitrate aufgebracht. Im Anschluß an die Tränkung erfolgt die Zersetzung bei Temperaturen von 200 bis 600°C und Reduktion zum elementaren Edelmetall. Auch andere, bekannte Verfahren können zum Aufbringen der Edelmetalle genutzt werden.

Die Katalysatoren sind zur Zersetzung von N₂O geeignet. Der Gegenstand der vorliegenden Erfindung ist daher ein Verfahren zur katalytischen Zersetzung von reinem oder in Gasgemischen enthaltenem N₂O gemäß Anspruch 1.

Vorzugsweise werden die erfindungsgemäßen Katalysatoren zur Zersetzung von N₂O in N₂O-haltigen Abgasströmen eingesetzt, wie sie beispielsweise bei Verfahren zur Herstellung von Adipinsäure, Salpetersäure, Hydroxylaminderivaten, Caprolactam, Glyoxal, Methylglyoxal, Glyoxylsäure oder bei Verfahren zur Verbrennung stickstoffhaltiger Materialien, z.B. NH₃, anfallen.

Besonders geeignet ist das Verfahren zur Zersetzung von N₂O in Abgasen der Adipinsäureherstellung und Salpetersäureherstellung. Des weiteren eignet sich das erfindungsgemäße Verfahren zur Reinigung von Prozeßgasen der Ammoniakverbrennung.

Aus den Salpetersäureabgasen kann das N₂O beseitigt werden, ohne daß weitere Stickoxide, NOₓ, (Wertprodukte) in nennenswerten Mengen zersetzt werden. Weitere Stickoxide sind Stickstoffmonoxid (NO), Distickstofftrioxid (N₂O₃), Stickstoffdioxid (NO₂), Distickstofftetroxid (N₂O₄), Distickstoffpentoxid (N₂O₅), Stickstoffperoxid (NO₃). Der Gehalt an Stickoxiden, NOₓ, kann in der Regel 0 bis 50 Vol.-%, bevorzugt 1 bis 40 Vol.-%, besonders bevorzugt 10 bis 30 Vol.-%, bezogen auf das Gesamtgas, betragen.

Das Verfahren eignet sich zur Reinigung von Abgasen, deren N₂O-Gehalt zwischen 0,01 und 50 Vol.-%, bevorzugt zwischen 0,01 und 30 Vol.-%, besonders bevorzugt zwischen 0,01 und 15 Vol.-%, bezogen auf das Gesamtgas, liegt.

Neben N₂O und weiteren Stickoxiden NOₓ können die Abgase beispielsweise auch N₂, O₂, CO, CO₂, H₂O und/oder Edelgase enthalten, ohne daß dies die Aktivität der Katalysatoren wesentlich beeinflußt. Geringfügige Hemmungen der Katalysatoraktivität können durch eine Erhöhung des Katalysatorvolumens bzw. durch eine Erniedrigung der Belastung ausgeglichen werden.

Aufgrund der hohen thermischen Stabilität der erfindungsgemäßen Katalysatoren kann das erfindungsgemäße Verfahren bei Temperaturen in einem Bereich von 500°C bis 900°C durchgeführt werden. Durch die hohe thermische Stabilität der erfindungsgemäßen Katalysatoren sind problemlos Lastwechsel möglich. Die thermische Desaktivierung der erfindungsgemäßen Katalysatoren bei hohen Temperaturen ist wesentlich geringer als die der aus dem Stand der Technik bekannten Katalysatoren, wie die nachfolgenden Beispiele zeigen. Besonders alterungsstabil sind La- und Zr-dotierte Katalysatoren. Wird das erfindungsgemäße Verfahren bei tieferen Temperaturen (200°C bis 500°C) durchgeführt, so ist eine Dotierung der erfindungsgemäßen Katalysatoren mit Edelmetallen von Vorteil.

Die nachfolgenden Beispiele erläutern die Erfindung zusätzlich.

### Beispiele

### Herstellung der Katalysatoren

### Vergleichsbeispiel 1 (WO 94/16798): Cu/Zn/Al-Spinell

Eine Mischung aus 2840 g "Puralox SCF" (Hersteller: Condea, Hamburg), 1660 g "Pural SB" (Hersteller: Condea, Hamburg) und 1000 g CuO (Hersteller: Merck, Darmstadt) wurde mit 200 ml Ameisensäure (gelöst in 1400 ml H₂O) 0,75 h verknetet, zu 3 mm Strängen extrudiert, getrocknet und 4 h bei 800°C calciniert. 714 g des CuAl₂O₄ enthaltenden Aluminiumoxidträgers (Wasseraufnahme: 69,1 %) wurden zweimal mit 490 ml einer salpetersauren (pH3) wäßrigen Lösung, die 326 g Zn(NO₃)₂ enthält, imprägniert, daraufhin 1 h bei Raumtemperatur belassen. Der imprägnierte Träger wurde bis zur Gewichtskonstanz bei 120°C getrocknet und abschließend 4 h bei 750°C calciniert.

### Vergleichsbeispiel 2 (WO 94/16798): Cu/Mg/Al-Spinell

Eine Mischung aus 3460 g "Puralox SCF", 1800 g "Pural SB" und 1200 g CuO wurde mit 180 ml Ameisensäure (gelöst in 3900 ml H₂O) 1 h verknetet, zu 3 mm Strängen extrudiert, getrocknet und 4 h bei 800°C calciniert. 852 g des CuAl₂O₄ enthaltenden Aluminiumoxidträgers (Wasseraufnahme: 70%) wurden dreimal mit 470 ml einer salpetersauren (pH 2,5) wäßrigen Lösung, die 452 g Mg(NO₃)₂ 6H₂O enthält, imprägniert, daraufhin 1 h bei Raumtemperatur belassen. Der imprägnierte Träger wurde bis zur Gewichtskonstanz bei 120°C getrocknet und abschließend 4 h bei 750°C calciniert.

### Vergleichsbeispiel 3: Cu/Al-Spinell

Eine Mischung aus 1978,3 g "Puralox SCF", 1082,3 g "Pural SB", 1942 g Cu(NO₃)₂ x 3H₂O, 660,47 g CuO wird mit 1,5 % Ameisensäure in 400 g Wasser 30 min gekollert, zu 3 mm Vollsträngen extrudiert, bei 120°C getrocknet und bei 750°C calciniert.

### Beispiel 1: einstufige Herstellung; Cu/Zn/Mg/Al-Spinell (nicht gemäß der Erfindung)

Eine Mischung aus 2169,3 g"Puralox SCF", 1185,9 g "Pural SB", 1090,1 g Cu(NO₃)₂ x 6H₂O, 370,74 g CuO, 1495,6 g Zn(NO₃)₂ x 4H₂O, 492g ZnO, 2129,6 g Mg(NO₃)₂ x 6H₂O wurde unter Zugabe von 750 g Wasser 30 min lang gekollert, zu 3 mm Strängen extrudiert, getrocknet und 4 h bei 750°C calciniert.

### Beispiel 2: zweistufige Herstellung: Cu/Mg/Al-Spinell (nicht gemäß der Erfindung)

Eine Mischung aus 1978,3 g "Puralox SCF", 1082,3 g "Pural SB", 1942 g Cu(NO₃)₂ x 3H₂O, 660,47 g CuO wird mit 1,5 % Ameisensäure in 400 g Wasser 30 min gekollert, zu 3 mm Vollsträngen extrudiert, bei 120°C getrocknet und bei 800°C calciniert. 4060 g dieses Trägers werden in drei Tränkschritten mit 1560 g Mg(NO₃)₂ getränkt. Nach jeder Tränkung werden die Stränge bei 120°C getrocknet und dann 4 h bei 750°C calciniert.

### Beispiel 3: zweistufige Herstellung: Cu/Zn/Al-Spinell (nicht gemäß der Erfindung)

Wie Beispiel 2, aber Tränkung von 4000 g des erhaltenen Trägers mit 2000 g Zn(NO₃)₂ in 2 Tränkschritten (Zn-Nitrat als 18 %ige Lösung in Wasser).

### Beipiel 4: zweistufige Herstellung: Cu/Zn/Mg/Al-Spinell (nicht gemäß der Erfindung)

Wie Beispiel 2, aber Tränkung von 4000 g des erhaltenen Trägers erst mit 1000 g Zn(NO₃)₂ in zwei Tränkschritten (Zn-Nitrat als 18%ige Lösung in Wasser), dann mit 750 g Mg(NO₃)₂ in zwei Tränkschritten (Mg-Nitrat als 8,3%ige Lösung in Wasser).

### Beispiel 5: zweistufige Herstellung: Vergleichskatalysator 1 + Mg-Nitrat: Cu/Zn/Mg/Al-Spinell (nicht gemäß der Erfindung)

715 g des Vergleichskatalysators 1 wurden mit 340 g Mg(NO₃)₂ getränkt, getrocknet und dann 4 h bei 750°C calciniert.

### Beispiel 6: zweistufige Herstellung: Vergleichskatalysator 1 + Zn-Nitrat: Cu/Zn/Al-Spinell (nicht gemäß der Erfindung)

715 g des Vergleichskatalysator 1 wurden mit 750 g Zn(NO₃)₂ getränkt, getrocknet und 4 h bei 750°C calciniert.

### Beispiel 7: La-dotierter Cu/Zn/Mg/Al-Spinell

Ein Katalysator wurde wie in Beipiel 5 hergestellt, jedoch wurde anstelle von reinem Pural (AIOOH) und Puralox (Al₂O₃) mit 3% La dotiertes Pural und mit 3 % La-dotiertes Puralox eingesetzt.

### Beispiel 8: Ph/Pd-dotierter Cu/Zn/Mg/Al-Spinell

Der Katalysator wurde durch Imprägnierung von Katalysator 5 mit einer Lösung von RhCl₃ und Pd(NO₃)₂ hergestellt. Der Katalysator wird bei 120°C getrocknet und 3 h bei 250°C getempert. Katalysator 8 enthält 0,3% Rh₂O₃ und 0,18% PdO.

### Beispiel 9: Rh/Pt-dotierter Cu/Zn/Mg/Al-Spinell

Der Katalysator wurde durch Imprägnierung von Katalysator 5 mit einer Lösung von RhCl₃ und Pt(NO₃)₂ hergestellt. Der Katalysator wird bei 120°C getrocknet und 3 h bei 250°C getempert. Katalysator 9 enthält 0,3% Rh₂O₃ und 0,18% PtO₂.

### Durchführung des Tests zur N₂O-Zersetzung

Um das Alterungsverhalten zu testen, wurden die Katalysatoren vor den Tests 21 d in einem Calcinierofen auf 750°C erhitzt, um sie künstlich zu altern. Anschließend wurden sie in die Testapparatur eingebaut und getestet. Der Umsatz im Vergleich zu den nicht getemperten Kontakten ist ein Maß für die thermische Desaktivierung.

Die Tests wurden unter quasi-isothermen Bedingungen in einem Salzbadreaktor durchgeführt. Als Wärmeträger diente eine Salzschmelze aus 53 Gew.-% KNO₃, 40 Gew.-% NaNO₂ und 7 Gew.-% NaNO₃. Die Zersetzung wurde in einem 600 mm langen Reaktionsrohr aus Hasteloy C durchgeführt. Der Innendurchmesser beträgt 14 mm. Das Gas wurde über eine längere Vorheizstrecke auf eine Reaktionstemperatur von 500°C gebracht. Um den Temperaturverlauf im Rohr messen zu können, wurde ein Innenrohr mit 3,17 mm Außendurchmesser eingesetzt, in dem ein Thermoelement leicht verschoben werden kann. Getestet wurden jeweils 40 ml Katalysatorsplitt der Siebfraktion 1,6 - 2,0 mm bei einem Druck von 5 bar absolut. Getestet wurde die N₂O-Zersetzung mit folgendem Gasgesmisch:

**6 % N**_{**2**}**O, 1,5 % H**_{**2**}**O, 1000 ppm NO; 10 % O**_{**2**}**, 1 % CO**_{**2**}**, Rest N**_{**2**}**; GHSV (Gas Hour Space Velocity) = 4000 NI Gas/IKat h**

### Ergebnisse der Tests

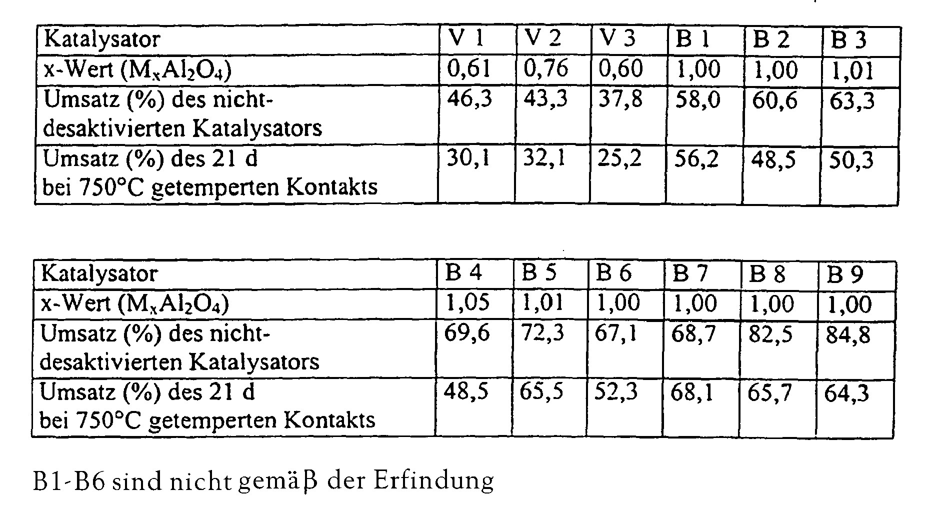

## Patentansprüche

1. Verfahren zur katalytischen Zersetzung von reinem oder in Gasgemischen enthaltenem N₂O bei Temperaturen zwischen 500 und 900°C, worin ein kupferhaltiger Katalysator eingesetzt wird, enthaltend eine Verbindung der allgemeinen Formel: .
MₓAl₂O₄
in der M Kupfer oder Mischungen von Kupfer mit Zink und/oder Magnesium bedeutet und wobei der katalysator als weitere Dotierungen Zirkonium und/oder Lanthan in oxidisches form in einer Morge von 0,01 bis 5,0 Gew.-% enthält **dadurch gekennzeichnet, dass** x einen Wert zwischen 0,95 und 1,1 aufweist.

2. Verfahren nach Anspruch 1, **dadurch gekennzeichnet, daß** die Zersetzung in Gegenwart von 0 bis 50 Vol.% NOₓ, bezogen auf das Gesamtgas, durchgeführt wird.

3. Verfahren nach Anspruch 1 oder 2, **dadurch gekennzeichnet, daß** das Gasgemisch zusätzlich N₂, O₂, CO, CO₂, H₂O und/oder Edelgase enthält.

4. Verfahren nach einem der Ansprüche 1 bis 3, **dadurch gekennzeichnet, daß** es sich bei dem Katalysator im wesentlichen um ein Spinell, das wobei der katalysator als weitere Dotierungen Zirkonium und/oder Lanthan in oxidisches form in einer Morge von 0,01 bis 5,0 Gew.-% enthält Oxide enthalten kann, handelt. wobei der katalysator als weitere Dotierungen Zirkonium und/oder Lanthan in oxidisches form in einer Morge von 0,01 bis 5,0 Gew.-% enthält im allgemeinen 0 bis 5 Gew.-%, bevorzugt 0 bis. 3,5 Gew.-%.

5. Verfahren nach einem der Ansprüche 1 bis 4, **dadurch gekennzeichnet, daß** der Katalysator zusätzlich Zr und/oder La in oxidischer Form enthält.

6. Verfahren nach einem der Ansprüche 1 bis 5, **dadurch gekennzeichnet, daß** der Katalysator zusätzlich Metalle der 8. Nebengruppe des Perioderisystems der Elemente enthält.

## Claims

1. Method for the catalytic decomposition of pure N₂O or N₂O present in gas mixtures at temperatures between 500 and 900°C, wherein a copper-containing catalyst is used containing a compound of the general formula:
MₓAl₂O₄
in which M denotes copper or mixtures of copper with zinc and/or magnesium, the catalyst containing, as further dopants, zirconium and/or lanthanum in oxidic form in an amount of 0.01 to 5.0% by weight, **characterized in that** x has a value between 0.95 and 1.1.

2. Method according to Claim 1, **characterized in that** the decomposition is carried out in the presence of 0 to 50% by volume of NOₓ, based on the total gas.

3. Method according to Claim 1 or 2, **characterized in that** the gas mixture additionally contains N₂, O₂, CO, CO₂, H₂O and/or noble gases.

4. Method according to any of Claims 1 to 3, **characterized in that** the catalyst is substantially a spinel which may contain in general 0 to 5% by weight, preferably 0 to 3.5% by weight, of oxides.

5. Method according to any of Claims 1 to 4, **characterized in that** the catalyst additionally contains Zr and/or La in oxidic form.

6. Method according to any of Claims 1 to 5, **characterized in that** the catalyst additionally contains metals of subgroup VIII of the Periodic Table of the Elements.

## Revendications

1. Procédé de décomposition catalytique du N₂O pur ou contenu dans des mélanges gazeux à des températures comprises entre 500 et 900°C, dans lequel on utilise un catalyseur à teneur en cuivre, contenant un composé de formule générale :
MₓAl₂O₄
dans laquelle M représente du cuivre ou des mélanges de cuivre avec du zinc et/ou du magnésium, le catalyseur contenant comme autres dopants du zirconium et/ou du lanthane sous forme oxydée en quantité de 0,01 à 5,0% en poids, **caractérisé en ce que** x présente une valeur comprise entre 0,95 et 1,1.

2. Procédé selon la revendication 1, **caractérisé en ce que** la décomposition est effectuée en présence de 0 à 50% en volume de NOₓ par rapport à la quantité totale de gaz.

3. Procédé selon la revendication 1 ou 2, **caractérisé en ce que** le mélange gazeux contient en outre les substances N₂, O₂, CO, CO₂, H₂O et/ou des gaz rares.

4. Procédé selon l'une quelconque des revendications 1 à 3, **caractérisé en ce que** le catalyseur est sensiblement un spinelle qui peut généralement contenir 0 à 5% en poids, de préférence, 0 à 3,5% en poids d'oxydes.

5. Procédé selon l'une quelconque des revendications 1 à 4, **caractérisé en ce que** le catalyseur contient, en outre, du Zr et/ou du La sous forme oxydée.

6. Procédé selon l'une quelconque des revendications 1 à 5, **caractérisé en ce que** le catalyseur contient, en outre, des métaux du 8^{ième} sous-groupe du système périodique des éléments.
